# DEMANDE DE BREVET EUROPEEN

(11) **EP 1 541 396 A1**
(43) Date de publication de la demande: **15.06.2005**
(21) Numéro de dépôt: 04292938.0
(22) Date de dépôt: 10.12.2004
(51) Int. Cl.: B60H 3/00

(54) **Aérateur de véhicule, notamment d'automobile, comportant un diffuseur de parfum**

(30) Priorité: 12.12.2003 FR 0314570
(71) Demandeur: Key Plastics International, 61130 Belleme (FR)
(72) Inventeur: Davril, Jean-Louis, 61400 Mortagne Au Perche (FR); Deplace, Bruno, 61130 Vaunoise (FR)
(74) Mandataire: Lemoine, Robert

(57) **Abrégé**

La présente invention concerne un aérateur pour introduire de l'air parfumé ou non dans l'habitacle d'un véhicule, notamment d'une automobile.

Cet aérateur comporte un corps creux (1) délimitant un passage relié à une source d'air conditionné et débouchant dans l'habitacle.

Un diffuseur de parfum (5) est associé au corps creux pour diriger dans le passage un flux d'air parfumé ou non provenant de la source d'air conditionné.

Selon l'invention, le diffuseur (5) comprend des premier et second circuits (6a,6b) s'étendant chacun entre la source d'air conditionné et le passage du corps creux et renfermant chacun une cartouche de parfum (7a,7b), ainsi que des moyens de sélection (8) pour obturer l'un au moins des deux circuits (6a,6b) et permettre ainsi la diffusion ou non dans l'habitacle d'un parfum provenant de l'une des cartouches.

## Description

La présente invention concerne un aérateur pour introduire de l'air parfumé ou non dans l'habitacle d'un véhicule, notamment d'une automobile, comportant un corps creux délimitant un passage relié à une source d'air conditionné et débouchant dans l'habitacle, un diffuseur de parfum étant associé au corps creux pour diriger dans le passage un flux d'air parfumé ou non provenant de la source d'air conditionné.

Les circuits d'aération des automobiles sont de plus en plus utilisés pour diffuser un parfum.

Or, il arrive parfois que le parfum choisi ne convienne pas à toutes les personnes susceptibles de conduire la même automobile.

Certaines personnes préfèrent donc voyager en étant dans une atmosphère non parfumée, même si elles n'apprécient pas particulièrement les odeurs régnant dans l'habitacle de l'automobile utilisée.

La présente invention se propose plus particulièrement d'apporter une solution à ce problème et, pour ce faire, elle a pour objet un aérateur ayant la structure indiquée au premier paragraphe ci-dessus et caractérisé en ce que le diffuseur comprend des premier et second circuits s'étendant chacun entre la source d'air conditionné et le passage du corps creux et renfermant chacun une cartouche de parfum, ainsi que des moyens de sélection pour obturer l'un au moins des deux circuits et permettre ainsi la diffusion ou non dans l'habitacle d'un parfum prédéterminé provenant de l'une des cartouches.

Ainsi, lorsque l'un des parfums ne convient pas à une personne, celle-ci a maintenant la possibilité de le remplacer par l'autre parfum, ce qui lui procure une solution supplémentaire pour dissiper les odeurs du véhicule qu'elle n'apprécie pas.

Selon un mode de réalisation particulier de l'invention, les moyens de sélection comprennent un élément répartiteur comportant des premier et second conduits débouchant dans le passage du corps creux, et des moyens de commande pour disposer l'élément répartiteur dans
- une première position extrême dans laquelle il intègre le premier conduit au premier circuit et obture le second circuit,
- une seconde position extrême dans laquelle il intègre le second conduit au second circuit et obture le premier circuit ; et
- une position intermédiaire située entre les première et deuxième positions extrêmes et dans laquelle il obture les premier et second circuits.

Grâce à ces moyens de sélection, le conducteur ou un passager du véhicule peut agir sur l'élément répartiteur pour diffuser dans l'habitacle l'un ou l'autre des deux parfums ou pour empêcher l'adjonction d'un parfum dans l'air introduit dans l'habitacle.

De préférence, l'élément répartiteur se présente sous la forme d'un disque monté rotatif et apte à être entraîné en rotation sous la commande d'une molette d'actionnement adjacente à l'extrémité du passage qui débouche dans l'habitacle, la molette permettant d'amener le disque dans l'une de ses positions extrêmes ou dans sa position intermédiaire.

Le conducteur ou un passager du véhicule peut ainsi amener rapidement l'élément répartiteur dans la position dans laquelle un parfum peut ou non être diffusé.

Afin de simplifier la structure de l'aérateur, la molette est de préférence prévue à la périphérie du disque.

De préférence, les premier et second conduits s'étendent radialement dans le disque et débouchent dans le passage du corps creux par l'intermédiaire d'un conduit commun axial.

Selon une caractéristique particulière de l'invention, le disque est monté rotatif dans un logement comprenant deux parties cylindriques opposées comportant des premier et second orifices diamétralement opposés, ces orifices intégrant respectivement le premier ou le second conduit au premier ou au second circuit selon que le disque est dans sa première ou sa seconde position extrême.

Pour éviter que les deux parfums puissent être diffusés en même temps, les premier et second conduits ne sont pas dans le prolongement l'un de l'autre, mais forment de préférence un angle obtus entre eux.

L'aérateur selon l'invention est en outre caractérisé en ce qu'il comprend des moyens d'obturation destinés à empêcher une introduction d'air, soit dans l'un des deux circuits lorsqu'une diffusion de parfum est souhaitée à partir de la cartouche de l'autre circuit, soit dans les deux circuits lorsqu'aucune diffusion de parfum n'est souhaitée.

Grâce à ces moyens d'obturation, une diffusion non souhaitée d'un parfum particulier ou d'un mélange des deux parfums est évitée, ce qui contribue au confort de l'utilisateur du véhicule.

Selon un mode de réalisation préféré, les moyens d'obturation comprennent une plaque coulissante comportant des premier et second orifices reliés chacun à la source d'air conditionné par une gaine souple, et pouvant être amenée soit dans une première position extrême dans laquelle le premier orifice relie la source d'air conditionné au premier circuit tandis que le second orifice est obturé, soit dans une seconde position extrême dans laquelle le second orifice relie la source d'air conditionné au second circuit tandis que le premier orifice est obturé, soit dans une position intermédiaire dans laquelle les premier et second orifices sont obturés.

Ainsi, selon la position dans laquelle la plaque coulissante est disposée, l'aérateur selon l'invention peut de manière sûre ne diffuser aucun parfum ou seulement l'un des deux parfums.

De préférence, la plaque coulissante est déplaçable de l'une à l'autre de ses positions extrêmes sous la commande du disque pendant que celui-ci est entraîné en rotation de l'une à l'autre de ses positions extrêmes.

Cette disposition a l'avantage de simplifier la structure de l'aérateur puisqu'il suffit d'agir sur la molette d'actionnement pour déplacer la plaque coulissante.

Selon un mode de réalisation particulièrement simple, la plaque coulissante comporte un renfoncement ayant deux parois latérales opposées contre lesquelles une protubérance prévue sur le disque est susceptible de s'appuyer lorsque celui-ci est entraîné en rotation.

Le déplacement de la plaque coulissante est donc assuré par la protubérance lorsque le disque, en tournant dans un sens ou dans l'autre, oblige ladite protubérance à exercer une pression sur l'une ou l'autre des parois latérales du renfoncement.

Par ailleurs, la plaque coulissante est de préférence déplaçable le long d'une contre-plaque comportant deux perçages, la distance séparant les orifices ménagés dans la plaque coulissante étant différente de celle séparant les perçages de la contre-plaque de sorte qu'un seul orifice et un seul perçage peuvent être en même temps l'un en face de l'autre.

Selon une caractéristique particulière de l'aérateur selon l'invention, le diffuseur de parfum comprend des moyens d'immobilisation pour retenir le disque dans ses positions extrêmes et intermédiaire.

Les risques pour que le disque tourne d'une manière non souhaitée, par exemple sous l'effet de vibrations, peuvent ainsi être éliminés.

Selon un mode de réalisation préféré, les moyens d'immobilisation comprennent trois encoches ménagées dans la périphérie du disque et une lame élastique fixe pourvue d'une saillie apte à coopérer avec chacune des encoches lorsque le disque est amené dans chacune de ses positions extrêmes et intermédiaire.

Ces moyens d'immobilisation sont particulièrement efficaces, tout en étant simples et peu coûteux.

Un mode d'exécution de la présente invention sera décrit ci-après à titre d'exemple nullement limitatif en référence aux dessins annexés dans lesquels :

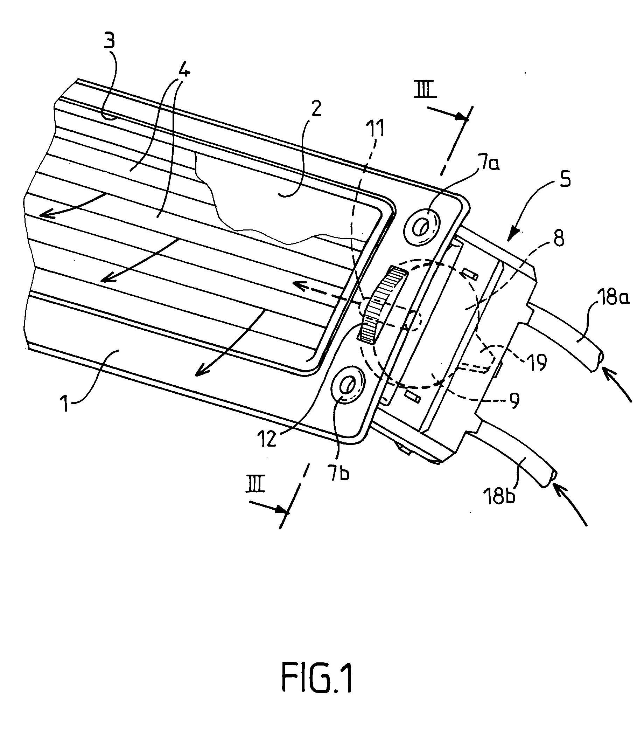

- la figure 1 est une vue en perspective schématique et partielle d'un aérateur conforme à l'invention ;
- la figure 2 est une vue en perspective schématique et en partie arrachée du diffuseur de parfum, la face longitudinale visible de celui-ci étant celle qui est tournée vers le passage du corps creux de l'aérateur ;
- la figure 3 est une vue en coupe selon la ligne III-III de la figure 1, le disque constituant l'élément répartiteur étant dans sa première position extrême ;
- la figure 4 est une vue en coupe analogue à la figure 3, mais montrant le disque dans sa seconde position extrême ; et
- la figure 5 est une vue en coupe analogue à la figure 3, mais montrant le disque dans sa position intermédiaire.

L'aérateur représenté sur les dessins a été conçu pour permettre à l'utilisateur d'un véhicule, notamment d'une automobile, de diffuser un parfum pouvant être choisi parmi deux parfums.

Cet aérateur, qui est plus particulièrement destiné à être installé sur le tableau de bord, comprend un corps creux 1 délimitant un passage 2 relié d'une manière connue en soi à la source d'air conditionné (non représentée) du véhicule.

Le passage 2 débouche dans l'habitacle par l'intermédiaire d'un orifice de sortie 3 au niveau duquel sont prévus des déflecteurs classiques 4 destinés à modifier l'orientation du flux d'air sortant.

Un diffuseur de parfum 5 est associé au corps creux 1 afin de diriger dans le passage 2 un flux d'air, parfumé ou non, provenant de la source d'air conditionné.

Ce diffuseur de parfum comprend un premier circuit 6a s'étendant entre la source d'air conditionné et le passage 2 du corps 1 et renfermant une première cartouche de parfum 7a, un second circuit 6b s'étendant également entre la source d'air conditionné et le passage 2 et renfermant une seconde cartouche de parfum 7b, et des moyens de sélection 8 permettant d'obturer les circuits 6a, 6b afin qu'aucun parfum ne soit diffusé dans l'habitacle du véhicule ou d'obturer l'un des deux circuits 6a, 6b afin d'autoriser la diffusion du parfum provenant de la cartouche située dans l'autre circuit.

Dans le mode de réalisation représenté, les moyens de sélection 8 comprennent un disque 9 comportant deux conduits 10a, 10b s'étendant radialement et débouchant tous deux dans le passage 2 du corps 1 par l'intermédiaire d'un conduit commun axial 11.

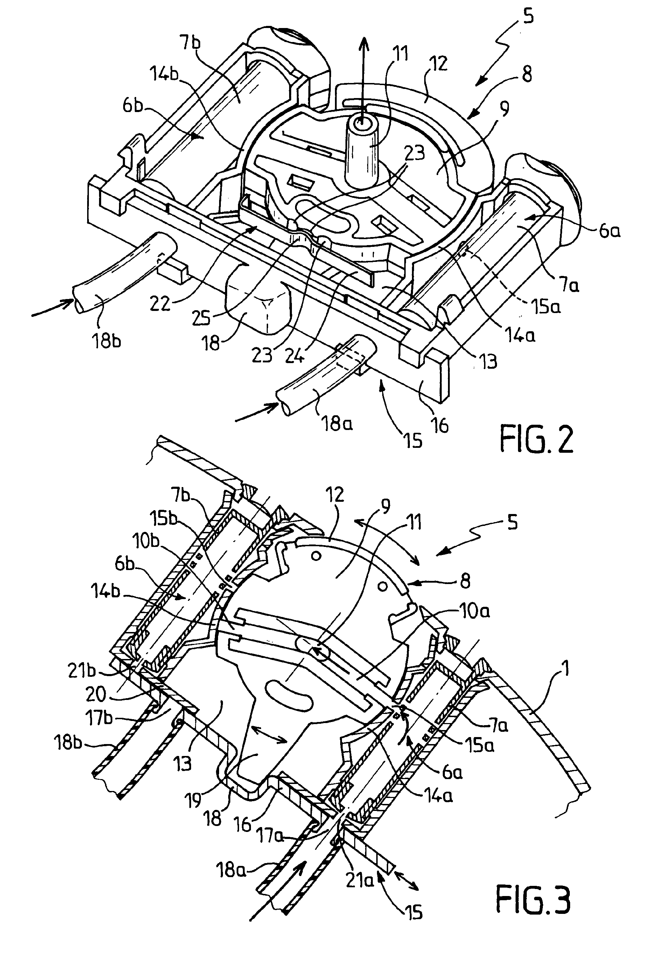

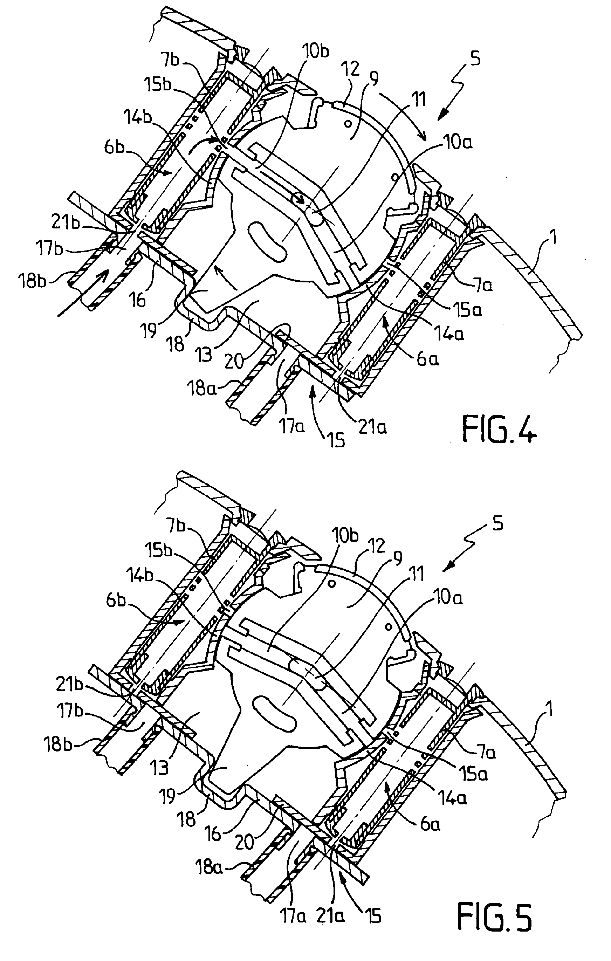

Le disque 9 est monté rotatif dans le diffuseur et peut être disposé dans :
- une première position extrême visible sur la figure 3, dans laquelle il intègre le premier conduit 10a au premier circuit 6a et obture le second circuit 6b ;
- une seconde position extrême visible sur la figure 4, dans laquelle il intègre le second conduit 10b au second circuit 6b et obture le premier circuit 6a ; et
- une position intermédiaire visible sur la figure 5, située entre les première et deuxième positions et dans laquelle il obture les deux circuits 6a, 6b.

Le disque 9 est pourvu à sa périphérie d'une molette 12 faisant saillie sur la face de l'aérateur située dans l'habitacle du véhicule, à proximité immédiate de l'orifice de sortie 3.

Grâce à cette molette, le conducteur ou un passager peut donc faire tourner le disque afin de l'amener dans l'une de ses positions extrêmes ou dans sa position intermédiaire.

Le disque 9 est monté rotatif dans un logement 13 comprenant deux parties cylindriques opposées 14a, 14b comportant des premier et second orifices 15a, 15b diamétralement opposés.

La figure 3 montre que l'orifice 15a relie le premier conduit 10a au premier circuit 6a lorsque le disque 9 est dans sa première position extrême.

Dans cette position, l'orifice 15b est obturé par le disque 9 de sorte que le second conduit 10b ne fait pas partie du second circuit et ne peut être parcouru par un flux d'air en provenance de la source d'air conditionné.

La figure 4 montre quant à elle que l'orifice 15b relie le second conduit 10b au second circuit 6b lorsque le disque est dans sa seconde position extrême.

Dans cette position, l'orifice 15a est obturé par le disque 9 de sorte que le premier conduit 10a ne fait pas partie du premier circuit et ne peut être parcouru par un flux d'air en provenance de la source d'air conditionné.

La figure 5 montre par ailleurs que les orifices 15a, 15b sont obturés par le disque de sorte que les premier et second conduits 10a, 10b ne peuvent être le siège d'une circulation d'air en provenance de la source d'air conditionné.

On notera ici que les conduits 10a, 10b forment un angle obtus, et ne peuvent par conséquent être en même temps alignés avec les orifices 15a, 15b.

L'aérateur représenté sur les dessins comprend également des moyens d'obturation 15 servant à empêcher une arrivée d'air soit seulement dans le premier circuit 6a lorsqu'une diffusion de parfum est souhaitée à partir de la cartouche 7b du second circuit 6b, soit seulement dans le second circuit 6b lorsqu'une diffusion de parfum est souhaitée à partir de la cartouche 7a du premier circuit 6a, soit dans les deux circuits 6a, 6b lorsqu'aucune diffusion de parfum n'est souhaitée.

Dans le mode de réalisation représenté, les moyens d'obuturation 15 comprennent une plaque coulissante 16 comportant deux orifices 17a, 17b reliés à la source d'air conditionné par deux gaines souples 18a, 18b.

La plaque coulissante 16 peut être amenée soit dans une première position extrême visible sur la figure 3 et dans laquelle l'orifice 17a relie la source d'air conditionné au premier circuit 6a tandis que l'orifice 17b est obturé, soit dans une seconde position extrême visible sur la figure 4 et dans laquelle l'orifice 17b relie la source d'air conditionné au second circuit 6b, tandis que l'orifice 17a est obturé, soit dans une position intermédiaire visible sur la figure 5 et dans laquelle les orifices 17a, 17b sont obturés.

Le déplacement de la plaque coulissante 16 de l'une à l'autre de ses positions extrêmes est assuré par le disque 9 lorsque celui-ci est entraîné en rotation de l'une à l'autre de ses positions extrêmes.

Comme on peut en effet le voir sur les figures 3 à 5, la plaque coulissante comporte dans sa partie centrale un renfoncement 18 ayant deux parois latérales opposées entre lesquelles est insérée une protubérance 19 prévue sur le disque 9.

Lorsque celui-ci est entraîné en rotation dans un sens ou dans l'autre, la protubérance 19 s'appuie contre la paroi latérale du renforcement 18 qui est située devant elle et entraîne la plaque 16 dans le sens correspondant.

La plaque 16 est déplaçable le long d'une contre-plaque 20 comportant deux perçages 21a, 21b séparés l'un de l'autre par une distance supérieure à la distance des orifices 17a, 17b.

Un seul orifice de la plaque 16 et un seul perçage de la contre-plaque 20 peuvent par conséquent être en même temps l'un en face de l'autre.

Ainsi, lorsque la plaque 16 est dans sa première position extrême visible sur la figure 3, son orifice 17a est aligné avec le perçage 21a de la contre-plaque 20 tandis que l'orifice 15a de la partie cylindrique 14a est devant l'entrée du conduit 10a.

Un flux d'air peut donc circuler dans le premier circuit 6a.

La cartouche de parfum 7a qui est située dans ce circuit, entre le perçage 21a et l'orifice 15a, et qui comprend une partie ajourée au niveau de ce dernier, peut donc diffuser son parfum dans le flux d'air empruntant le premier circuit 6a pour se diriger dans le passage 2 du corps 1 et de là dans l'habitacle du véhicule.

L'orifice 17b de la plaque 16 est quant à lui obturé par la contre-plaque 20.

Un flux d'air ne peut donc circuler dans le second circuit 6b.

La cartouche de parfum 7b qui est située dans ce circuit, entre le perçage 21b et l'orifice 15b, et qui comprend une partie ajourée au niveau de ce dernier, ne peut évidemment pas diffuser son parfum puisque l'entrée du second conduit 10b n'est pas devant l'orifice 15b.

Lorsque la plaque 16 est dans sa seconde position extrême visible sur la figure 4, son orifice 17b est aligné avec le perçage 21b de la contre-plaque 20, tandis que l'orifice 15b de la partie cylindrique 14b est devant l'entrée du conduit 10b.

Un flux d'air peut donc circuler dans le second conduit 6b.

La cartouche de parfum 7b peut donc diffuser son parfum dans le flux d'air empruntant le second circuit 6b pour se diriger dans le passage 2 du corps 1, puis dans l'habitacle du véhicule.

L'orifice 17a de la plaque 16 est quant à lui obturé par la contre-plaque 20.

Un flux d'air ne peut donc circuler dans le premier circuit 6a,.

La cartouche de parfum 7a ne peut par conséquent diffuser son parfum puisque l'entrée du premier conduit 10a n'est pas devant l'orifice 15a.

Lorsque la plaque 16 est dans la position intermédiaire visible sur la figure 5, ses orifices 17a et 17b sont obturés par la contre-plaque 20 tandis que les entrées des conduits 10a, 10b ne sont pas devant les orifices 15a, 15b.

Les cartouches de parfum 7a, 7b ne peuvent donc pas diffuser leur parfum.

En se référant maintenant à la figure 2, on remarquera que le diffuseur de parfum comprend des moyens d'immobilisation 22 destinés à retenir le disque 9 dans ses positions extrêmes et intermédiaire.

Dans le mode de réalisation représenté, les moyens d'immobilisation 22 comprennent trois encoches 23 ménagées dans la périphérie du disque 9, à l'opposé de la molette 12, et une lame élastique 24 fixée sur le corps du diffuseur 5 et pourvue d'une saillie 25 apte à pénétrer dans chacune des encoches 23 lorsque le disque est amené dans chacune de ses positions extrêmes et intermédiaire.

Ainsi, le disque 9 ne risque pas de se déplacer accidentellement sous l'action de vibrations lorsqu'il est dans l'une de ses positions extrêmes et intermédiaire.

Pour être complet, on précisera que les cartouches de parfum 7a, 7b sont insérables dans les circuits 6a, 6b depuis la face de l'aérateur qui est située dans l'habitacle du véhicule.

Elles s'étendent de part et d'autre du disque 9 et peuvent être verrouillées dans les circuits 6a, 6b à l'aide d'un organe approprié afin d'éviter par exemple que de jeunes enfants les enlèvent de leurs logements.

## Revendications

1. Aérateur pour introduire de l'air parfumé ou non dans l'habitacle d'un véhicule, notamment d'une automobile, comportant un corps creux (1) délimitant un passage (2) relié à une source d'air conditionné et débouchant dans l'habitacle, et un diffuseur de parfum associé au corps creux pour diriger dans le passage (2) un flux d'air parfumé ou non, le diffuseur comprenant
- des premier et second circuits (6a, 6b) renfermant chacun une cartouche de parfum (7a, 7b) ;
- un élément répartiteur (9) comportant des premier et second conduits (10a, 10b) débouchant dans le passage (2) ;
- des moyens de commande (12) permettant de disposer l'élément répartiteur (9) dans :
- une première position extrême dans laquelle il fait communiquer le premier conduit (10a) avec le premier circuit (6a) et empêche le second conduit (10b) de communiquer avec le second circuit (6b) ;
- une seconde position extrême dans laquelle il fait communiquer le second conduit (10b) avec le second circuit (6b) et empêche le premier conduit (10a) de communiquer avec le premier circuit (6a) ; et
- une position intermédiaire située entre les première et deuxième positions extrêmes et dans laquelle il empêche les premier et second conduits (10a, 10b) de communiquer respectivement avec les premier et second circuits (6a, 6b) ; et
- une plaque coulissante (16) destinée à empêcher une introduction d'air soit dans l'un des deux circuits (6a, 6b) lorsqu'une diffusion de parfum est souhaitée à partir de la cartouche de l'autre circuit, soit dans les deux circuits lorsqu'aucune diffusion de parfum n'est souhaitée,
**caractérisé en ce que** les circuits (6a, 6b) sont reliés sélectivement à la source d'air conditionné par la plaque coulissante (16) selon que celle-ci est dans l'une ou l'autre de ses positions extrêmes.

2. Aérateur selon la revendication 1, **caractérisé en ce que** l'élément répartiteur (9) se présente sous la forme d'un disque monté rotatif tandis que les moyens de commande (12) sont constitués par une molette d'actionnement prévue à la périphérie du disque, la molette étant adjacente à l'extrémité du passage (2) qui débouche dans l'habitacle et permettant d'amener le disque (9) dans l'une de ses positions extrêmes ou dans sa position intermédiaire.

3. Aérateur selon la revendication 1 ou 2, **caractérisé en ce que** les premier et second conduits (10a, 10b) s'étendent radialement dans le disque (9) et débouchent dans le passage (2) du corps creux (1) par l'intermédiaire d'un conduit commun axial (11).

4. Aérateur selon l'une quelconque des revendications 2 à 4, **caractérisé en ce que** le disque (9) est monté rotatif dans un logement (13) comprenant deux parties cylindriques opposées (14a, 14b) comportant des premier et second orifices (15a, 15b) diamétralement opposés, ces orifices intégrant respectivement le premier (10a) ou le second conduit (10b) au premier (6a) ou au second circuit (6b) selon que le disque est dans sa première ou sa seconde position extrême.

5. Aérateur selon la revendication 3 ou 4, **caractérisé en ce que** les premier et second conduits (10a, 10b) forment entre eux un angle obtus.

6. Aérateur selon l'une quelconque des revendications 1 à 5, **caractérisé en ce que** la plaque coulissante (16) comporte des premier et second orifices (17a, 17b) reliés chacun à la source d'air conditionné par une gaine souple (18a, 18b), et peut être amenée soit dans une première position extrême dans laquelle le premier orifice (17a) relie la source d'air conditionné au premier circuit (6a) tandis que le second orifice (17b) est obturé, soit dans une seconde position extrême dans laquelle le second orifice (17b) relie la source d'air conditionné au second circuit (6b) tandis que le premier orifice (17a) est obturé, soit dans une position intermédiaire dans laquelle les premier et second orifices (17a, 17b) sont obturés.

7. Aérateur selon la revendication 6, **caractérisé en ce que** la plaque coulissante (16) est déplaçable de l'une à l'autre de ses positions extrêmes sous la commande du disque (9) pendant que celui-ci est entraîné en rotation de l'une à l'autre de ses positions extrêmes.

8. Aérateur selon la revendication 7, **caractérisé en ce que** la plaque coulissante (16) comporte un renfoncement (18) ayant deux parois latérales opposées contre lesquelles une protubérance (19) prévue sur le disque (9) est susceptible de s'appuyer lorsque celui-ci est entraîné en rotation.

9. Aérateur selon l'une quelconque des revendications 1 à 8, **caractérisé en ce que** la plaque coulissante (16) est déplaçable le long d'une contre-plaque (20) comportant deux perçages (21a, 21b), la distance séparant les orifices (17a, 17b) ménagés dans la plaque coulissante (16) étant différente de celle séparant les perçages de la contre-plaque de sorte qu'un seul orifice et un seul perçage peuvent être en même temps l'un en face de l'autre.

10. Aérateur selon l'une quelconque des revendications 2 à 9, **caractérisé en ce que** le diffuseur de parfum (5) comprend des moyens d'immobilisation (22) pour retenir le disque dans ses positions extrêmes et intermédiaire.

11. Aérateur selon la revendication 10, **caractérisé en ce que** les moyens d'immobilisation (22) comprennent trois encoches (23) ménagées dans la périphérie du disque (9) et une lame élastique fixe (24) pourvue d'une saillie (25) apte à coopérer avec chacune des encoches (23) lorsque le disque (9) est amené dans chacune de ses positions extrêmes et intermédiaire.
